# EUROPEAN PATENT APPLICATION

(11) **EP 3 872 003 A1**
(43) Date of publication of application: **01.09.2021**
(21) Application number: 19893727.8
(22) Date of filing: 02.04.2019
(51) Int. Cl.: B65D 88/74

(54) **ELECTRICAL FIELD GENERATING REPOSITORY**

(30) Priority: 06.12.2018 JP 2018228776
(71) Applicant: Nittsu Shoji Co., Ltd., Minato-ku Tokyo 1058338 (JP)
(72) Inventor: MITSUMA, Shuhei, Tokyo 105-8338 (JP)
(74) Representative: Schmid, Wolfgang
(86) International application number: PCT/JP2019/014683
(87) International publication number: WO 2020/115923

(57) **Abstract**

[Abstract] Provided is an electrostatic field-generating cool container with refinements introduced to an electrode that forms an electrostatic field. The electrode that forms an electrostatic field is constituted of strip electrodes 7, each of which is in the form of a flat plate. The strip electrodes 7 are housed in electrode-housing members 6. The electrode-housing members 6 have electrical insulation properties and are each in the form of a rod to shield the strip electrodes 7 from the interior of the accommodation chamber 4 in the container 2. The electrode-housing members 6 are arranged side by side.

## Description

### Technical Field

The present invention relates to a repository and, more specifically, to an electric field-generating repository that forms an electric field (electrostatic field) in an accommodation chamber inside a casing.

### Background Art

Fresh food, such as fishery products, produce (vegetables and fruits), and meet, is likely to spoil quickly.

It is therefore necessary to enable perishables to resist spoilage after harvest as long as possible during transport until, for example, retail display. The challenge is that the freshness of food needs to be preserved throughout a pre-transport stage (after harvest and before transport), a transport stage, and a post-transport stage (after transport and until retail display). This challenge is common to perishables in general, including ornamental plants.

Preservation by partial freezing (in a temperature range of -3 to -1°C), preservation in a chilled state at temperatures just above freezing (in a temperature range of 0 to 2°C), and preservation by refrigeration (in a temperature range of 3 to 10°C) are considered to be suited to preserving the freshness of perishables. A known container that enables preservation under cooled conditions provides cooling with generation of an electrostatic field (see Japanese Unexamined Patent Application Publication No. 2012-250773). While the electrostatic field-generating cool container cools perishables stored in an accommodation chamber, an electrode disposed in the accommodation chamber and energized with high voltage forms an electrostatic field to help preserve the freshness of perishables.

The electrostatic field-generating cool container known in the art includes a large panel electrode (an electrode aluminum plate 1A) for forming an electrostatic field. The electrode aluminum plate 1A is hung from a ceiling surface of the accommodation chamber in the container with insulating support members (21) in a manner so as to cover the bulk of a ceiling surface of the accommodation chamber. It is indicated that perishables stored in the electrostatic field-generating cool container known in the art can be placed anywhere in the accommodation chamber inside the container in a manner so as to be kept from contact with the electrode aluminum plate 1A.

### Citation List

### Patent Literature

PTL 1: Japanese Unexamined Patent Application Publication No. 2012-250773, paragraph [0044] and Fig. 8.

### Summary of Invention

### Technical Problem

Such a conventional electrostatic field-generating cool container includes a large panel electrode that covers the bulk of the ceiling surface of the accommodation chamber. The electrode thus has the disadvantage of being heavy. This translates into an increase in the overall weight of the electrostatic field-generating cool container in which the electrode is incorporated.

The large panel electrode of the conventional electrostatic field-generating cool container is not covered with an insulating sheath and is exposed in the accommodation chamber. Thus, accidental contact between the large panel electrode and stored products is dangerous.

The present invention has been made against a backdrop of the techniques known in the art. It is an object of the present invention to provide an electric field-generating repository with refinements introduced to an electrode that forms an electric field (electrostatic field). It is another object of the present invention to provide an electric field-generating cool repository capable of cooling stored products. Solution to Problem

To attain the objective, the present invention has the following features.

An electric field-generating repository according to the present invention includes a casing and an electrode. The casing includes an accommodation chamber and a door for opening and closing the accommodation chamber. The electrode forms an electric field in the accommodation chamber when being powered. The electrode is constituted of bar electrodes arranged side by side on an inner surface of the accommodation chamber. The electric field-generating repository includes, in addition to the casing and the bar electrodes, electrode-housing members that have electrical insulation properties and shield the bar electrodes from the interior of the accommodation chamber.

That is, according to an aspect of the present invention, the electrode that forms an electric field is constituted of bar electrodes. The electrode constituted of bar electrodes is more lightweight than a conventional large panel electrode that covers the bulk of the inner surface of the accommodation chamber. The present invention thus enables the electric field-generating repository to achieve light weight. The electrode-housing members have insulating properties. The electrode-housing members are arranged side by side on the inner surface of the accommodation chamber and shield the bar electrodes from the interior of the accommodation chamber. While the bar electrodes are energized with high voltage, stored products are kept from contact with the bar electrodes for safety. This feature offers an improvement over the conventional large panel electrode that is not covered with an insulating sheath.

The electrode-housing members may be tubular members in which the bar electrodes are housed.

That is, according to another aspect of the present invention, the electrode-housing members in which the bar electrodes are housed are tubular members. This feature facilitates the installation of the bar electrodes on the inner surface of the accommodation chamber. This contrasts with the situation in which the installation of the large panel electrode on the inner surface of the accommodation chamber is burdensome. The tubular members in which the respective bar electrodes are housed may each be a one-piece member or may each be constructed of pieces connected end-to-end. The tubular members may each be in the form of a ring having no end gap or a ring having an end gap. The tubular members may each be divided in the circumferential direction.

The electrode-housing members may be plate-like members in which the bar electrodes are housed.

That is, according to still another aspect of the present invention, the electrode-housing members in which the bar electrodes are housed are plate-like members. This feature facilitates the installation of the bar electrodes on the inner surface of the accommodation chamber. This contrasts with the situation in which the installation of the large panel electrode on the inner surface of the accommodation chamber is burdensome.

The electrode-housing members may be shaped in such a manner that the bar electrodes are covered along their entire length with the electrode-housing members.

That is, according to still another aspect of the present invention, the bar electrodes are entirely covered with the respective electrode-housing members such that the bar electrodes energized with high voltage are not exposed. In this way, stored products are kept from contact with the bar electrodes for safety. The bar electrodes are kept from dust and are thus maintained in a safe state when being energized with high voltage. The bar electrodes are safely protected from getting wet during cleanup of the accommodation chamber.

The electrode-housing members may each have recesses in which the bar electrodes are placed.

That is, according to still another aspect of the present invention, more than one bar electrodes is housed in one electrode-housing member in such a manner that the individual bar electrodes fit in the respective recess. This feature enables a reduction in the number of electrode-housing members in which the bar electrodes are disposed.

The bar electrodes may be connected in parallel to a power source.

That is, according to still another aspect of the present invention, the bar electrodes are connected in parallel. If one of electric wires connected to the respective bar electrodes breaks, the other bar electrodes would remain unaffected and keep forming an electrostatic field.

The electrode-housing members may each include an electrode-housing portion in which the corresponding one of the electrode-housing members is placed and an insulation cavity that provides isolation between the inner surface of the accommodation chamber and the bar electrode placed in the electrode-housing portion.

That is, according to still another aspect of the present invention, the electrode-housing members each include not only the electrode-housing portion in which corresponding one of the electrode-housing members is placed but also the insulation cavity that provides isolation between the inner wall surface of the accommodation chamber in the casing and the bar electrode placed in the electrode-housing portion. This feature is conducive to suppressing formation of an electric field extending from the bar electrodes and directed toward the inner surface of the accommodation chamber and enables the formation of an electric field extending into the accommodation chamber.

The bar electrodes may extend from a side on which the door is disposed, and the bar electrodes may end short of an innermost wall of the accommodation chamber.

That is, according to still another aspect of the present invention, the bar electrodes extend from the side on which the door is disposed, and the bar electrodes end short of the innermost wall of the accommodation chamber. The bar electrodes are thus capable of forming an electric field throughout substantially the entire length of the accommodation chamber. The electric field extending throughout substantially the entire length of the accommodation chamber may be formed by one bar electrode. The number of constituent components may thus be less than would be the case if more than one bar electrode is used.

The bar electrodes may be strip electrodes that are conductive flat plates.

That is, according to still another aspect of the present invention, each of the bar electrodes is a strip electrode that is a conductive flat plate. These bar electrodes are thin and lightweight. The insulation cavity provided over such a thin strip electrode in the form of a flat plate within the electrode-housing member may be larger than the insulation cavity that would be provided over a tubular electrode, a round bar electrode, or a square bar electrode within the electrode-housing member. The strip electrodes are thus capable of efficiently forming an electric field extending into the accommodation chamber.

The casing may include a step portion provided between a ceiling surface of the accommodation chamber and an opening fitted with the door for opening and closing, with each end portion on the door side of each of the electrode-housing members being disposed opposed to the step portion.

That is, according to still another aspect of the present invention, each end portion on the door side of each of the electrode-housing members is disposed opposed to the step portion. The end portion of each of the electrode-housing members that is closer than the other end portion to the door is located at a level higher than an upper edge the opening and is thus hidden from view when the accommodation chamber is viewed from outside the opening. When being carried in through the opening, products are kept from contact with the end portion of each of the electrode-housing members that is closer than the other end portion to the door. This ensures smooth loading of products for storage.

The casing may include a step portion provided between a ceiling surface of the accommodation chamber and an opening fitted with the door for opening and closing, with each of the electrode-housing members not protruding into the interior of the accommodation chamber beyond an upper frame portion of the opening.

That is, according to still another aspect of the present invention, each of the electrode-housing members does not protrude into the interior of the accommodation chamber beyond the upper frame portion of the opening. The space occupied by the electrode-housing members within the accommodation chamber is located at a level higher in the height direction of the accommodation chamber than the upper frame portion of the opening. This feature enables the installation of the electrode-housing members on the ceiling surface of the accommodation chamber while ensuring that the accommodation chamber has an adequately large capacity.

All of these features of the electric field-generating repository according to the present invention are also applicable to an electric field-generating container that address the aforementioned problem. That is, an electric field-generating repository according to the present invention includes a container casing and an electrode. The container casing includes an accommodation chamber and a door for opening and closing the accommodation chamber. The electrode forms an electric field in the accommodation chamber when being powered. The electrode is constituted of bar electrodes arranged side by side on an inner surface of the accommodation chamber. The electric field-generating repository includes, in addition to the container casing and the electrode, electrode-housing members that have electrical insulation properties and shield the bar electrodes from the interior of the accommodation chamber. The electric field-generating container according to the present invention causes actions and effects similar to those caused by the aforementioned electric field-generating repository.

The electric field-generating repository according to the present invention may be implemented as an electric field-generating cooler including a cooling apparatus that cools an accommodation chamber. The electric field-generating container according to the present invention may be implemented as an electric field-generating cool container including a cooling apparatus that cools an accommodation chamber. That is, the combined use of the electric field (electrostatic field) and the cooling function of the present invention implemented as above creates a synergistic effect of enabling perishables to resist spoilage longer such that the freshness of perishables is preserved more effectively.

### Advantageous Effects of Invention

The present invention offers an advantage in that the electrode for forming an electric field is constituted of the bar electrodes and is thus smaller than the conventional large panel electrode. Another advantage of the present invention is that the electrode-housing members shield the bar electrodes from the interior of the accommodation chamber to ensure the safe installation of the bar electrodes.

### Brief Description of Drawings

[Fig. 1] Fig. 1 is a sectional view of an electrostatic field-generating cool container according to an embodiment, schematically illustrating the electrostatic field-generating cool container taken along line I-I in Fig. 2.
[Fig. 2] Fig. 2 is a sectional view of the electrostatic field-generating cool container taken along line II-II in Fig. 1.
[Fig. 3] Fig. 3 is an end view of the electrostatic field-generating cool container taken along line III-III in Fig. 1.
[Fig. 4] Fig. 4 is a sectional view of an electrode-housing member and a mounting fitting illustrated in Fig. 1.
[Fig. 5] Fig. 5 is a bottom view of the mounting fitting illustrated in Fig. 4.
[Fig. 6] Fig. 6 is an enlarged view of Part VI in Fig. 1.
[Fig. 7] Fig. 7 is an explanatory drawing for describing actions and effects caused by the electrode-housing member and a bar electrode.
[Fig. 8] Fig. 8 is an explanatory drawing and illustrates modifications of the electrode-housing member and modifications of the bar electrode.
[Fig. 9] Fig. 9 is an explanatory drawing and illustrates modifications of an electrode member.

### Description of Embodiments

The following describes, with reference to the accompanying drawing, an electrostatic field-generating cool container 1, which is an embodiment of an electric field-generating repository and an electric field-generating cooler according to the present embodiment. With a door 2e at the front of an electrostatic field-generating cool container 1, the right-and-left direction, the height direction, the depth direction of the electrostatic field-generating cool container 1 are hereinafter referred to as X, Z, and Y directions, respectively. The wording "first ..." and "second ..." used herein or in appended claims are intended to make different constituent components distinguishable from one another and are not intended to represent a specific order or relative superiority. Each of the drawings schematically illustrates a principal part of the device configuration of the electrostatic field-generating cool container 1 for the purpose of facilitating the understanding.

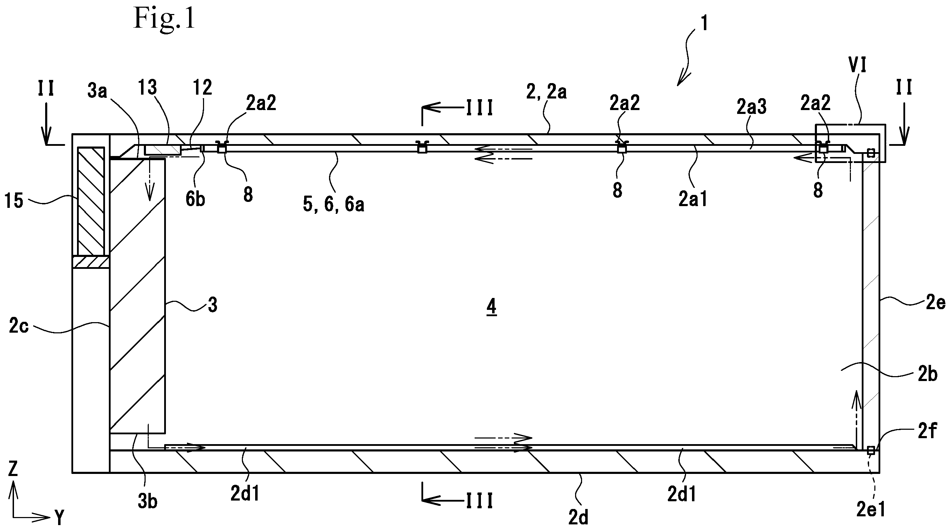

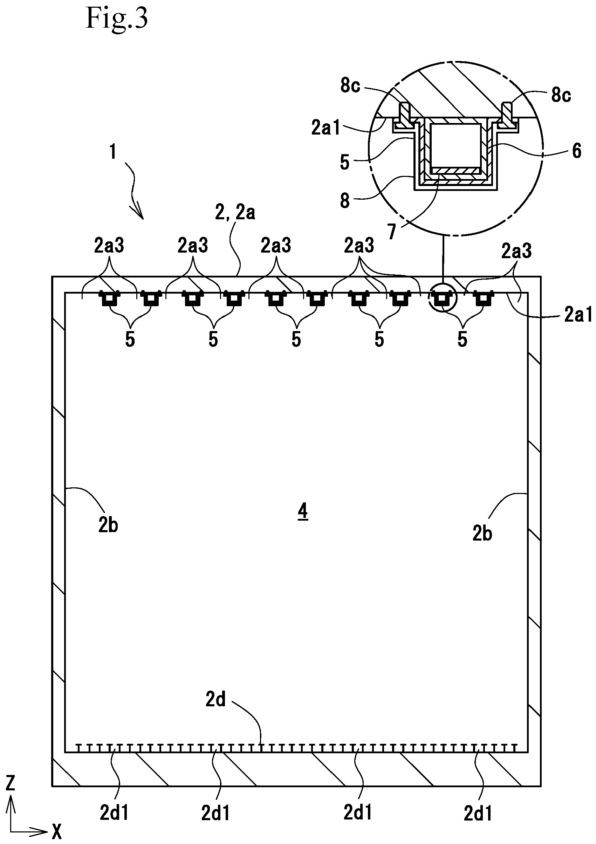

### Electrostatic Field-Generating Cool Container 1 (Figs. 1 to 7)

The electrostatic field-generating cool container 1 includes a container casing 2 (casing) and a cooling apparatus 3. The container casing 2 is a rectangular parallelepiped and includes an accommodation chamber 4. The container casing 2 includes a ceiling portion 2a, a pair of side wall portions 2b, an innermost wall portion 2c, a floor portion 2d, and a door 2e. The ceiling portion 2a, the pair of side wall portions 2b, the innermost wall portion 2c, the floor portion 2d, and the door 2e each include an exterior finishing panel, an interior finishing panel, and a heat insulator disposed between the exterior and interior finishing panels. This structure eliminates the susceptibility to the outside air temperature and enables the cooling apparatus 3 to maintain a predetermined temperature of the accommodation chamber 4. The interior finishing panels of the components such as the ceiling portion 2a, the pair of side wall portions 2b, the innermost wall portion 2c, the floor portion 2d, and the door 2e face the interior of the accommodation chamber 4, and front surfaces of these interior finishing panels constitute an inner surface of the accommodation chamber 4. The innermost wall portion 2c in the present embodiment is an outer surface panel of the cooling apparatus 3. In some embodiments, the innermost wall portion 2c is a wall panel independent of the cooling apparatus 3. The cooling apparatus 3 includes a suction portion 3a and an air outlet 3b. Air in the accommodation chamber 4 is sucked in through the suction portion 3a, and cold air is blown into the accommodation chamber 4 through the air outlet 3b. The cold air blown into the accommodation chamber 4 through the air outlet 3b is guided and flows to the door 2e through floor surface ventilation paths 2d1, each of which is groove-shaped and formed between T rails constituting the floor portion 2d. The cold air transferred to the door 2e then flows upward along the door 2e and reaches a ceiling surface 2a1 of the ceiling portion 2a. The cold air transferred to the ceiling surface 2a1 is guided and flows to the cooling apparatus 3 through ceiling surface ventilation paths 2a3, each of which is groove-shaped and will be described later. The cold air is then sucked in through the suction portion 3a. That is, cold air circulates in the accommodation chamber 4 as denoted by an arrow with a dash-dot-dot line in Fig. 1. The structure of the electrostatic field-generating cool container 1 complies with the international standard for containers (ISO 668:2013) issued by the International Organization for Standardization.

The ceiling surface 2a1 of the accommodation chamber 4 is provided with electrode members 5, which are arranged side by side. In the present embodiment, ten electrode members 5 are provided. Each electrode member 5 is in the form of a rod throughout its entire length. The electrode members 5 are arranged in parallel in the crosswise direction of the ceiling surface 2a1 (i.e., in the X direction), with the longitudinal direction of each electrode member 5 coinciding with the longitudinal direction of the ceiling surface 2a1 (i.e., the Y direction). The ceiling surface ventilation paths 2a3 extend in the longitudinal direction of the ceiling surface 2a1 in such a manner that two of the ceiling surface ventilation paths 2a3 are each located between the corresponding one of the side wall portions 2b and the electrode member 5 adjacent thereto, and the other ceiling surface ventilation paths 2a3 are each located between adjacent ones of the electrode members 5. The cold air transferred to the ceiling surface 2a1 is guided through the ceiling ventilation paths 2a3, which are groove-shaped, in a manner so as to flow in the direction from the door 2e toward the cooling apparatus 3. That is, the electrode members 5 each function as a guide for cold air flowing along the ceiling surface 2a1. The electrode members 5 are disposed in such a manner that electrode-housing members 6, which will be described later, are in contact with the ceiling surface 2a1. There is no clearance left between each electrode-housing member 6 and the ceiling surface 2a1 such that the cold air does not leak from the ceiling ventilation paths 2a3. This tight fit enables the ceiling ventilation paths 2a3 in the present embodiment to serve as a more effective guide for the cold air. The spacing between adjacent ones of electrode members 5 may, for example, be about 20 cm.

The electrode members 5 each include the electrode-housing member 6, a strip electrode 7, and fasteners 8. The strip electrodes 7 are an embodiment of bar electrodes. The electrode-housing members 6 are fixed to the ceiling surface 2a1 (i.e., the inner surface of the accommodation chamber 4) with the fasteners 8.

The electrode-housing members 6 are made of electrical insulating rigid resin and may, for example, be made of rigid polyvinyl chloride. The rigid polyvinyl chloride (PVC) has flame retardancy, heat-resisting properties, and a brittle temperature that render it suited for use as containers. In view of the fact that the electrostatic field-generating cool container 1 has the function of generating an electrostatic field, rigid polyvinyl chloride is particularly suited for formation of an electrostatic field in the accommodation chamber 4 because of its excellent electrical insulation properties and its high dielectric constant, which promote transmission of an electric field generated by the strip electrodes 7.

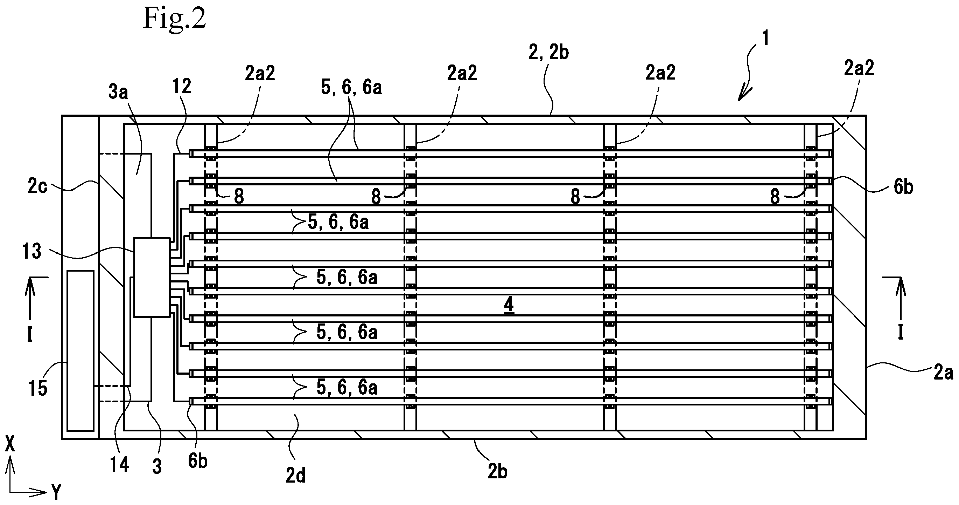

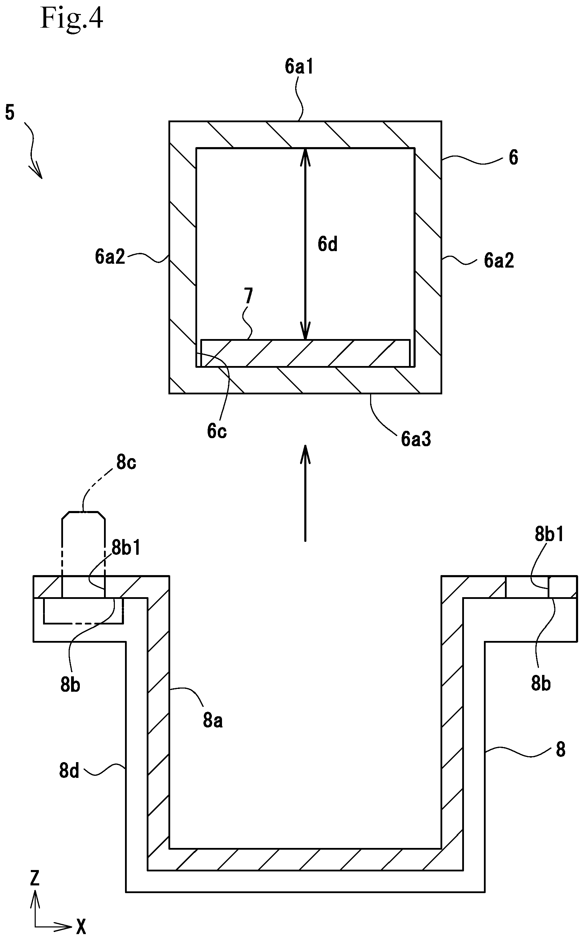

Each electrode-housing member 6 is a tubular member and includes a main body part 6a and caps 6b. The main body part 6a is a rectangular or square tube, and both ends of the main body part 6a are closed with the caps 6b. As illustrated in Fig. 4, the main body part 6a includes a top face portion 6a1, a pair of side face portions 6a2, and a bottom face portion 6a3. As illustrated in Figs. 1 and 2, the electrode-housing members 6 extend from a side on which the door 2e is disposed, and the electrode-housing members 6 end short of the innermost wall portion 2c. Each electrode-housing member 6 is not composed of discrete tubes extending in the longitudinal direction and is a single tube having a wall with no holes throughout its entire length. Each strip electrode 7 is covered with the corresponding electrode-housing member 6 along its entire length in such a manner as to be shielded from the interior of the accommodation chamber 4 by the corresponding electrode-housing member 6. That is, each strip electrode 7 is not exposed in the accommodation chamber 4 along its entire length. In this way, stored products in the accommodation chamber 4 are kept from contact with the strip electrodes 7 for safety. The strip electrodes 7 are also kept from dust and are thus maintained in a safe state when being energized with high voltage. The strip electrodes 7 are safely protected from getting wet during cleanup of the interior of the accommodation chamber 4. The avoidance of moisture protects the strip electrodes 7 from, for example, rust, which would otherwise cause corrosion of the strip electrodes 7 and would eventually compromise electrical continuity of the strip electrodes 7 and formation of an electric field that is an electrostatic field. The accommodation chamber 4, which is repeatedly loaded with various cargoes (i.e., stored products), may be easily cleaned up. Both ends of each electrode-housing member 6 are closed with the caps 6b such that each strip electrode 7 is sealed in the corresponding electrode-housing member 6. This eliminates the possibility that the stored products will come into contact with the strip electrodes 7 through the ends of the electrode-housing members 6. The electrode-housing members 6 will be kept from dust and will also be prevented from getting wet during cleanup.

The electrode-housing members 6 each include an electrode-housing portion 6c and an insulation cavity 6d. The electrode-housing portion 6c is an inner space of the electrode-housing member 6. The strip electrode 7 is placed in the electrode-housing portion 6c. The space provided as the electrode-housing portion 6c is shaped and sized in conformance with the shape of the bar electrode placed therein and, especially, in conformance with the height of the bar electrode. The electrode-housing portion 6c is a recess in which the strip electrode 7 is placed.

The insulation cavity 6d is provided over the strip electrode 7 placed in the electrode-housing portion 6c and provides isolation between the strip electrode 7 and the ceiling surface 2a1 of the accommodation chamber 4 in the container casing 2. The placement of the strip electrode 7 does not necessitate the insulation cavity 6d, which leads to an increase in the size of the electrode-housing member 6 in the height direction (i.e., the Z direction). Nevertheless, the insulation cavity 6d in the electrode-housing member 6 is advantageous in that it provides a high-insulation air space within the electrode-housing member 6. The air space (i.e., the insulation cavity 6d) suppresses formation of an electric field extending from the strip electrode 7 and directed toward the ceiling surface 2a1 that is at ground potential. Meanwhile, the formation of an electric field extending into the accommodation chamber 4 is facilitated. Consequently, an electrostatic field is efficiently and effectively formed in the housing space within the accommodation chamber 4. The insulation cavity 6d may, for example, be five centimeters high.

The strip electrodes 7 are conductive flat plates, such as aluminum plates. The strip electrodes 7 extend from the side on which the door 2e side is disposed, and the strip electrodes 7 end short of the innermost wall portion 2c. The strip electrodes 7 are thus capable of forming an electrostatic field throughout substantially the entire length of the accommodation chamber 4. Each strip electrode 7 in the present embodiment is a single plate. The number of constituent components may thus be less than would be the case if two or more strip electrodes 7 are connected end-to-end in a line.

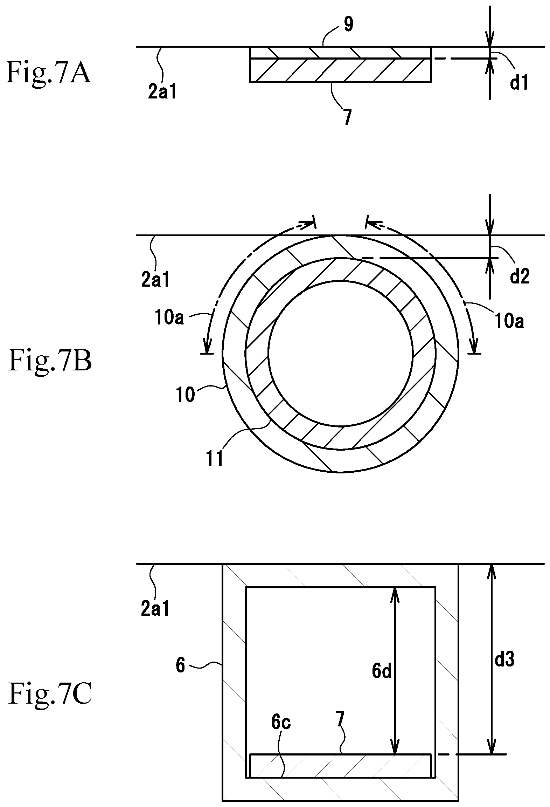

The strip electrodes 7 are thin and lightweight. The insulation cavity 6d provided over the strip electrode 7, which is in the form of a flat plate and is thin, may be larger in the height direction (i.e., the Z direction) than the insulation cavity that would, for example, be provided over a tubular electrode, a round bar electrode, or a square bar electrode. The use of the strip electrodes 7 is conducive to suppressing formation of an electric field directed toward the ceiling surface 2a1 that is at ground potential while the formation of an electric field extending into the accommodation chamber 4 is facilitated. The electrostatic field extending into the accommodation chamber 4 may thus be formed more efficiently and more effectively. This will be described below in more detail with reference to Fig. 7.

Fig. 7A illustrates a strip electrode 7 fixed to the ceiling surface 2a1 with an adhesive tape 9. Fig. 7B illustrates an electrode-housing member 10 and a cylindrical electrode 11. The electrode-housing member 10 is cylindrical, and the cylindrical electrode 11 is a metal tube fitted in the electrode-housing member 10. The electrode-housing member 10 is fixed to the ceiling surface 2a1 with fasteners similar to the fasteners 8. Fig. 7C illustrates the electrode-housing member 6 and the strip electrode 7 in the present embodiment.

Referring to Fig. 7A, the distance between the strip electrode 7 and the ceiling surface 2a1 that is at ground potential is denoted by d1 and is as small as the thickness of the adhesive tape 9; that is, the strip electrode 7 is close to the ceiling surface 2a1. In this case, an electric field extending from the strip electrode 7 and directed toward the ceiling surface 2a1 is likely to be formed while formation of an electric field extending into the accommodation chamber 4 is suppressed. It is thus difficult to form, in an effective manner, an electrostatic field extending in the accommodation chamber 4.

Referring to Fig. 7B, the cylindrical electrode 11 has a large surface area. In this respect, the cylindrical electrode 11 is suited to forming an electrostatic field. The distance between the cylindrical electrode 11 and the ceiling surface 2a1 that is at ground potential is denoted by d2 and is as small as the thickness of the electrode-housing member 10; that is, the cylindrical electrode 11 is close to the ceiling surface 2a1. The insulation cavity 6d is not provided within the electrode-housing member 10. As in the case with the strip electrode 7 in Fig. 7A, an electric field extending from the cylindrical electrode 11 and directed toward the ceiling surface 2a1 is likely to be formed while formation of an electric field extending into the accommodation chamber 4 is suppressed. It is thus difficult to form, in an effective manner, an electrostatic field extending in the accommodation chamber 4. The electrode-housing member 10 is cylindrical and has an upper circumferential surface 10a, which is curved upward toward the ceiling surface 2a1 and thus tends to be covered with dust.

Referring to Fig. 7C, the strip electrode 7 is in the form of a flat plate and is thin. The distance between the strip electrode 7 and the ceiling surface 2a1 that is at ground potential is denoted by d3 and is greater than each of the distances d1 and d2; that is, the insulation cavity 6d over the strip electrode 7 is larger in the height direction (i.e., the Z direction) than the insulation cavity 6d over either of the other electrodes. The strip electrodes 7 are thus capable of forming an electrostatic field in the accommodation chamber 4 more efficiently and more effectively.

Reducing d2, which is the distance between the ceiling surface 2a1 and the cylindrical electrode 11 in Fig. 7B, to d3 in Fig. 7C necessitates not only reducing the diameter of the cylindrical electrode 11 but also increasing the size of the electrode-housing member 10 in the height direction. In contrast, the present embodiment enables a reduction in the size of the electrode-housing member 6.

The electrode-housing member 6 is in the form of a rectangular tube and is disposed in such a manner that the top face portion 6a1 is in contact with the ceiling surface 2a1. Unlike the electrode-housing member 10 in Fig. 7B, the electrode-housing member 6 does not become covered with dust. This improves the ease of cleaning up the accommodation chamber 4.

The strip electrode 7 is much more lightweight than the conventional large panel electrode that covers the bulk of the ceiling surface 2a1 of the accommodation chamber 4. The use of many strip electrodes 7 as a replacement for the conventional large panel electrode offers a savings in weight accordingly. This enables the electrostatic field-generating cool container 1 to achieve light weight.

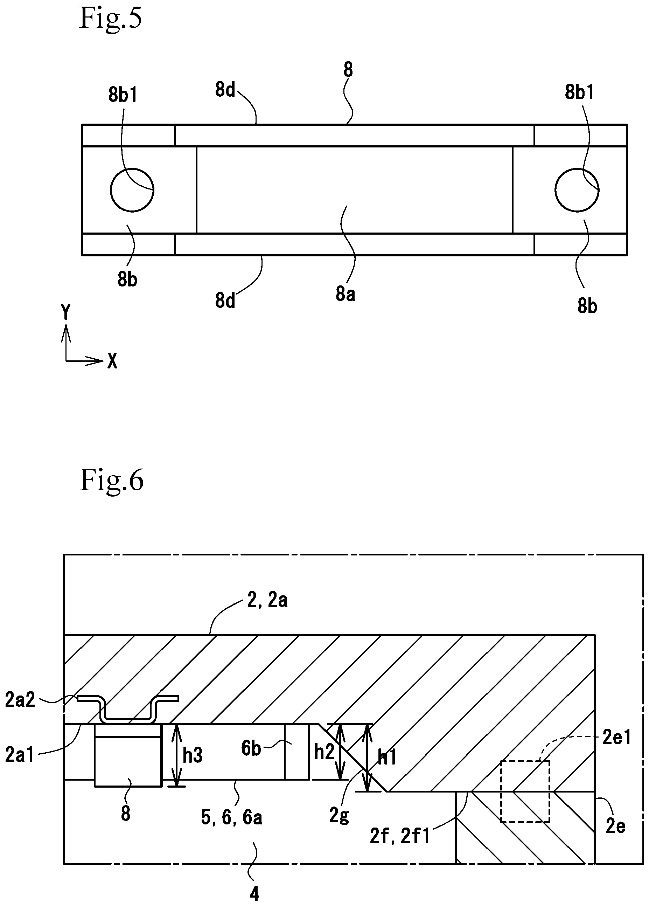

Each electrode member 5 is supported by the fasteners 8 in different places and is fixed to the ceiling surface 2a1 with the fasteners 8. Referring to Figs. 4 and 5, each fastener 8 includes a holding portion 8a, a flange portion 8b, and a rivet 8c. The holding portion 8a is inverted U-shaped. The flange portion 8b is provided on an upper end of the holding portion 8a. The fasteners 8 are made of rigid resin such as rigid polyvinyl chloride such that the forming of an electric field by the strip electrodes 7 is not affected by the fasteners 8.

As illustrated in Fig. 4, the holding portion 8a fits over the electrode-housing member 6 in such a way as to support the side face portions 6a2 and the bottom face portion 6a3. The flange portion 8b has holes 8b1, through which the respective rivets 8c are inserted. The holding portion 8a and the flange portion 8b are provided with a pair of reinforcing walls 8d, which extend in the height direction (i.e., the Z direction). For the given height dimension of the reinforcing wall 8d on the flange portion 8b, heads of the rivets 8c do not protrude through the surface of the reinforcing wall 8d. During, for example, loading of products for storage, the reinforcing wall 8d keeps the products from contact with the rivets 8c accordingly.

The rivets 8c are fixed to the ceiling surface 2a1. The fixation positions of the rivets 8c correspond to sites where reinforcements 2a2 are provided. The reinforcements 2a2 are embedded in a back surface of the ceiling surface 2a1 to provide greater rigidity in the ceiling surface 2a1.

The electrode-housing member 6 is in the form of a rod. The holding portion 8a may thus be placed over the electrode-housing member 6 and fastened with the rivets 8c to fix the electrode member 5 to the ceiling surface 2a1. The present embodiment thus eases the installation of the electrode members 5. This contrasts with the situation in which the installation of the conventional large panel electrode is burdensome.

The following describes wiring and connections of the strip electrodes 7.

The strip electrodes 7 are connected with electric wires 12, each of which has a first end portion and a second end portion. One of two end portions of each strip electrode 7 is closer than the other end portion to the innermost wall portion 2c and is connected with the first end portion of the corresponding electric wire 12. The caps 6b each include an insertion section (not illustrated) through which the electric wire 12 inserted. The second ends of the electric wires 12 are connected to a branching device 13. The branching device 13 is connected to a voltage control board 15 through a power cable 14. The voltage control board 15 has the function of controlling high voltage with which the individual strip electrodes 7 are energized. The voltage control board 15 faces an outer surface of the innermost wall portion 2c. The power cable 14 is routed through a hole of the innermost wall portion 2c. The hole (not illustrated) is on the upper right of the innermost wall portion 2c with the outer surface of the innermost wall portion 2c being in front of the viewer. The voltage control board 15 is connected to the cooling apparatus 3, which includes mainly a compressor and a power supply device. The power supply device supplies the voltage control board 15 with power. That is, the strip electrodes 7 are connected in parallel to the power supply device of the cooling apparatus 3. The power supply device is a power source and supplies the strip electrodes 7 with power.

The strip electrodes 7 connected in parallel to the branching device 13. If one of the electric wires 12 connected to the respective strip electrodes 7 breaks, the other strip electrodes 7 would remain unaffected and keep forming an electrostatic field.

The surface area of the electrode constituted of the strip electrodes 7 is smaller than the surface area of the conventional large panel electrode. This smaller surface area translates into a smaller amount of current applied to the strip electrodes 7. This means that a smaller power supply device will suffice. Such a small power supply device may be included in the cooling apparatus 3 to supply power for formation of an electrostatic field.

The following describes, with reference to Fig. 6, features associated with the arrangement of the container casing 2 and the electrode members 5.

The container casing 2 has an opening 2f, which is fitted with the door 2e for opening and closing. The door 2e is constructed of a set of double doors, with one door on the left and the other door on the right. Each of the doors is rotatably supported about a rotating shaft 2e1. A step portion 2g is provided between the ceiling surface 2a1 of the accommodation chamber 4 and the opening 2f. The step portion 2g is an inclined surface sloping upward from the opening 2f to the ceiling surface 2a1.

Each end portion on the door 2e side of each electrode member 5 (each electrode-housing member 6) is disposed opposed to the step portion 2g. One end portion of each electrode member 5 (each electrode-housing member 6) closer than the other end portion to the door is located at a level higher than the upper edge of the opening 2f and is thus hidden from view when the accommodation chamber 4 is viewed from outside the opening 2f (i.e., outside the container casing 2). When being carried in through the opening 2f, products are kept from contact with the end portion of each electrode member 5 (each electrode-housing member 6) closer than the other end portion to the door. This ensures smooth loading of products for storage.

Each electrode member 5 (each electrode-housing member 6) of the given height does not protrude into the interior of the accommodation chamber 4 beyond an upper frame portion 2f1 of the opening 2f. Referring to Fig. 6, h1 is greater than h2, where h1 denotes the height of the step portion 2g and h2 denotes the height of each electrode-housing member 6. The height h1 of the step portion 2g is greater than h3, which denotes the height of each fastener 8. That is, the electrode-housing members 6 and the fasteners 8 are located at a level higher than the upper frame portion 2f1 of the opening 2f. Products for storage that are of the same height as the opening 2f and carried by a forklift may thus be pushed into the accommodation chamber 4 without coming into contact with the electrode members 5. This ensures that the products are smoothly loaded deep into the accommodation chamber 4. Thus, the present embodiment enables the installation of the electrode members 5 on the ceiling surface 2a1 of the accommodation chamber 4 while ensuring that the accommodation chamber 4 has an adequately large capacity.

As described above, the electrostatic field-generating cool container 1 according to the present embodiment offers the following advantages. The electrode for forming an electrostatic field is constituted of the strip electrodes 7 in the form of flat plates and is thus smaller than the conventional large panel electrode. The compactness of the electrodes translates into a savings in the weight of the electrode, thus enabling the electrostatic field-generating cool container 1 to achieve light weight. The compactness of the electrode also translates into a smaller amount of current applied to the strip electrodes 7. This means that a smaller power supply device will suffice. The electrode-housing members 6, which having electrical insulation properties and cover the respective strip electrodes 7, are in the form of rods, and the stored products are safely kept from contact with the strip electrodes 7 accordingly.

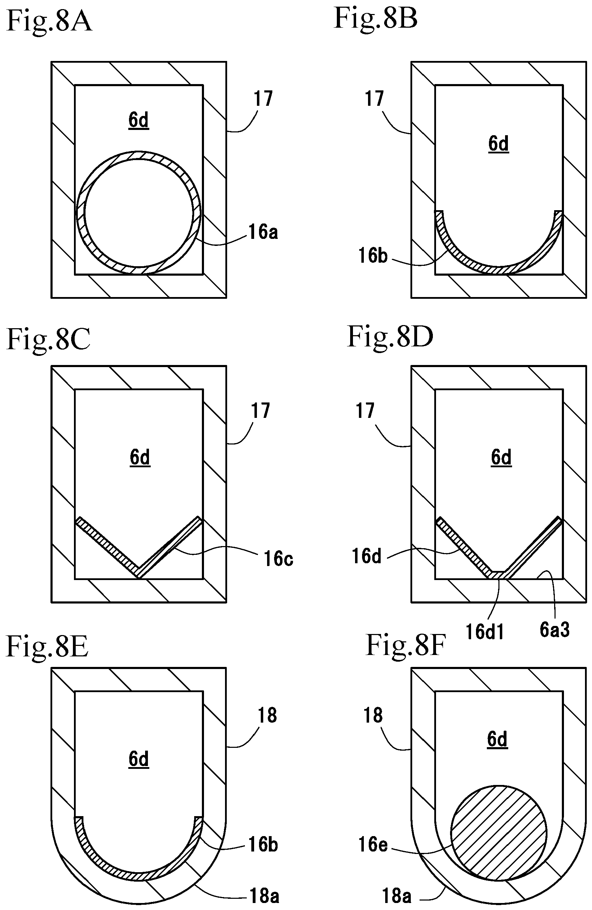

### Modifications of Embodiment (Fig. 8)

The following describes modifications of the above-mentioned embodiment of the present invention.

In the embodiment above, ten electrode members 5 are arranged. In some embodiments, the number of electrode members 5 is less than ten or more than ten. It is only required that the formation of an electrostatic field suited to preserving freshness of perishables in the accommodation chamber 4 be ensured.

In the embodiment above, the electrode members 5 on the ceiling surface 2a1 are arranged in parallel and spaced in the X direction, that is, in the right-and-left direction (i.e., the crosswise direction) of the container casing 2. In some embodiments, the electrode members 5 are arranged in parallel and spaced in the Y direction, namely, the depth direction (i.e., the longitudinal direction) of the container casing 2. The number of electrode members 5 for this layout is greater than the number of electrode members 5 for the layout in the embodiment above. This would lead to an increase in the number of constituent components. Unlike the electrode members 5 in the embodiment above, the electrode members 5 arranged in parallel and spaced in the Y direction each do not function as a guide for cold air. The electrode members 5 may be arranged obliquely to Y direction, namely, the depth direction (i.e., the longitudinal direction) of the container casing 2.

In the embodiment above, the electrode members 5 are disposed on the ceiling surface 2a1 of the container casing 2 in a manner so as to protrude into the interior of the accommodation chamber 4. In some embodiments, the electrode members 5 are fitted in groove-shaped receiving recesses provided in the ceiling surface 2a1. In this case, the electrode members 5 do not protrude into the interior of the accommodation chamber 4, or the degree of prominence of the electrode members 5 in the accommodation chamber 4 is reduced.

In the embodiment above, the electrode members 5 are disposed on the ceiling surface 2a1 of the container casing 2 (i.e., on the inner surface of the accommodation chamber 4). In some embodiments, the electrode members 5 are disposed on inner side surfaces of the side wall portions 2b on the right and left sides of the container casing 2, in which the accommodation chamber 4 is defined. In this case, the inner side surfaces of the side wall portions 2b are regarded as the inner surface of the accommodation chamber 4. Alternatively, the electrode members 5 may be disposed on a floor surface of the floor portion 2d of the container casing 2, in which the accommodation chamber 4 is defined. In this case, the floor surface of the floor portion 2d is regarded as the inner surface of the accommodation chamber 4. The bar electrodes (i.e., the strip electrodes 7 in the form of bars) are covered with the electrode-housing members 6 in the form of rods. This provides ease of installation in confined areas in various places. More specifically, the electrode members 5 may be fitted in receiving recesses provided in the inner side surfaces of the side wall portions 2b or may be fitted in receiving recesses provided in the floor portion 2d. In this case, the electrode members 5 do not protrude into the interior of the accommodation chamber 4, or the degree of prominence of the electrode members 5 in the accommodation chamber 4 is reduced.

In the embodiment above, each electrode-housing member 6 is in the form of a rectangular tube. In some embodiments, each electrode-housing member is in the form of a (U-shaped) tube that does not include the top face portion 6a1 facing the ceiling surface 2a1. In this case, the circumferential surface of each strip electrode 7 is not entirely covered with the corresponding electrode-housing member. In this respect, this modification fails to cause actions and effects similar to those caused by the embodiment above. An insulating member such as an insulating sheet may be disposed between the ceiling surface 2a1 and each of the strip electrodes 7 housed in the respective U-shaped electrode-housing members.

The strip electrodes 7 in the form of flat plates are described in the embodiment above as the bar electrodes, which may be modified as illustrated in Fig. 8.

Fig. 8A illustrates a modification in which each bar electrode is a cylindrical electrode 16a. On the downside, this modification involves upsizing of the electrode housing member; more specifically, the insulation cavity 6d is provided within an electrode-housing member 17, which is in turn thicker in profile. This is the difference between the cylindrical electrode 16a and the strip electrode 7 in the embodiment above.

Fig. 8B illustrates a modification in which each bar electrode is an arc-shaped electrode 16b. This modification has an advantage in that the insulation cavity 6d provided over the arc-shaped electrode 16b housed in the electrode-housing member 17 identical to the one illustrated in Fig. 8A is larger than the insulation cavity 6d provided over the cylindrical electrode 16a illustrated in Fig. 8A. Another advantage of this modification is that the surface area of the arc-shaped electrode 16b is greater than the surface area of the strip electrode 7 in the form of a flat plate and is thus capable of forming a strong electrostatic field. On the downside, this modification involves upsizing of the electrode-housing member; more specifically, in the case that the height of the insulation cavity 6d in the electrode-housing member 17 is equal to the height of the insulation cavity 6d provided over the strip electrode 7 in the electrode-housing member 6, the electrode-housing member 17 is thicker in profile than the electrode-housing member 6.

Fig. 8C illustrates a modification in which each bar electrode is a first V-shaped electrode 16c. As in the case with the arc-shaped electrode 16b illustrated in Fig. 8B, this modification has an advantage in that the insulation cavity 6d provided over the first V-shaped electrode 16c housed in the electrode-housing member 17 identical to the one illustrated in Fig. 8A is larger than the insulation cavity 6d provided over the cylindrical electrode 16a illustrated in Fig. 8A. Another advantage of this modification is that the surface area of the first V-shaped electrode 16c is greater than the surface area of the strip electrode 7 in the form of a flat plate and is thus capable of forming a strong electrostatic field. On the downside, this modification involves upsizing of the electrode-housing member; more specifically, in the case that the height of the insulation cavity 6d in the electrode-housing member 17 is equal to the height of the insulation cavity 6d provided over the strip electrode 7 in the electrode-housing member 6, the electrode-housing member 17 is thicker in profile than the electrode-housing member 6.

Fig. 8D illustrates a modification in which each bar electrode is a second V-shaped electrode 16d. The second V-shaped electrode 16d has a flat face portion 16d1, which is placed on the bottom face portion 6a3. This structure offers an advantage in that the second V-shaped electrode 16d is more stable than the first V-shaped electrode 16c illustrated in Fig. 8C.

Fig. 8E illustrates a modification in which each bar electrode is the arc-shaped electrode 16b identical to the one illustrated in Fig. 8B. In this modification, a bottom face portion 18a of an electrode-housing member 18 is a curved face shaped in conformance with the arc-shaped electrode 16b. This modification has the same advantage as the modification illustrated in 8B. Another advantage of this modification in that during loading of products for storage or unloading of stored products, the products accidentally coming into contact with the bottom face portion 18a will slide over the bottom face portion 18a, namely, the curved face without getting seriously damaged.

Fig. 8F illustrates a modification in which each bar electrode is a round bar electrode 16e. As the round bar electrode 16e in this modification, more than one small-diameter bar electrode 16e may be provided. The round bar electrode 16e may be replaced with a square bar electrode. The electrode-housing member 18 in this modification is identical to the one illustrated in Fig. 8E.

The electrode-housing member 6 in the embodiment above may be provided with a cushioning member, which is disposed on outer surfaces of the side face portions 6a2 and an outer surface of the bottom face portion 6a3 in a manner so as to face the interior of the accommodation chamber 4. On contact with the stored products, the cushioning member lessens the impact of a shock. In the embodiment above, the electrode-housing member 6 is a rectangular tube made of rigid resin and be in the form of a rectangular tube. In some embodiments, the electrode-housing member 6 is a tube made of hard rubber.

In the embodiment above, the electrode-housing member 6 and the strip electrode 7 are discrete members. In some embodiments, the electrode-housing member 6 and the strip electrode 7 are integrally molded by insert molding such that the strip electrode is immovable on the electrode-housing member.

In the embodiment above, the electrode-housing member 6 and the strip electrode 7 are each provided as a one-piece member extending in the Y direction, namely, the depth direction (i.e., the longitudinal direction) of the accommodation chamber 4. In some embodiments, the electrode-housing member 6 and the strip electrode 7 are each constructed of shorter pieces connected end-to-end in the longitudinal direction of the accommodation chamber 4. On the downside, the number of constituent components is greater than would be the case if the electrode-housing member 6 and the strip electrode 7 are each provided as a one-piece member as in the embodiment above.

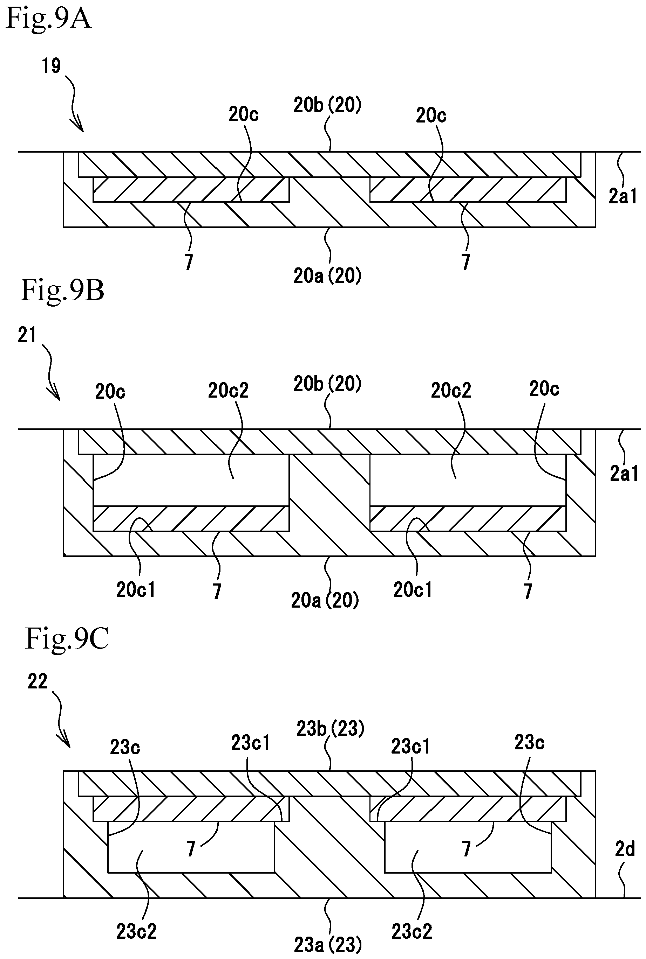

In the embodiment above, the electrode member 5 includes the electrode-housing member 6 in the form of a rectangular tube and the strip electrode 7 housed in the electrode-housing member 6. In some embodiments, the electrode member 5 is replaced with an electrode member 19, which is illustrated in Fig. 9A. The electrode member 19 is fixed to the ceiling surface 2a1. The electrode member 19 includes an electrode-housing member 20, which is a plate-like member. The electrode-housing member 20 is a box-shaped member composed of a main body 20a and a lid 20b. The main body 20a and the lid 20b are each provided as a molded article of electrical insulating resin. The main body 20a has recesses 20c, each of which is in the form of a frame. The strip electrodes 7 are placed in the respective recesses 20c. Referring to Fig. 9A, the main body 20a has two recesses 20c. The main body 20a may have one recess 20c or may have three or more recesses 20c. Two or more electrode members 19 may be arranged side by side. Each recess 20c fits over outer surfaces of the corresponding strip electrode 7. The electrode member 19 may be fixed with bolts, a tape, or fasteners similar to the fasteners 8 in the embodiment above. The advantage of the use of the electrode member 19 is that two or more strip electrodes 7 are fixed with one electrode-housing member 20.

Fig. 9B illustrates an electrode member 21, which is a modification of the electrode member illustrated in Fig. 9A and differs from the electrode member illustrated in Fig. 9A in that the recesses 20c of the electrode-housing member 20 each include an electrode-housing portion 20c1 and an insulation cavity 20c2. The insulation cavity 20c2 provides a high-insulation air space within the electrode-housing member 20a. The air space suppresses formation of an electric field extending from the strip electrode 7 and directed toward the ceiling surface 2a1 that is at ground potential. Meanwhile, the formation of an electric field extending into the accommodation chamber 4 is facilitated. Consequently, an electrostatic field is efficiently and effectively formed in the housing space within the accommodation chamber 4.

Fig. 9C illustrates an electrode member 22, which is disposed on the floor surface of the floor portion 2d. The electrode member 22 includes an electrode-housing member 23, which is a plate-like member. The electrode-housing member 23 is a box-shaped member composed of a main body 23a and a lid 23b. The main body 23a and the lid 23b are each provided as a molded article of electrical insulating resin. The main body 23a has recesses 23c, each of which is in the form of a frame. The strip electrodes 7 are placed in the respective recesses 23c. Referring to Fig. 9C, the main body 23a has two recesses 23c. The main body 23a may have one recess 23c or may have three or more recesses 23c. The recesses 23c each include an electrode-housing portion 23c1 and an insulation cavity 23c2. With the electrode member 22 being disposed on the floor portion 2d, the up-and-down relationship between the electrode-housing portion 23c1 and the insulation cavity 23c2 is the inverse of the up-and-down relationship between the electrode-housing portion and the insulation cavity in each of the previous examples. The insulation cavity 23c2 provides a high-insulation air space within the electrode-housing member 23. The air space suppresses formation of an electric field extending from the strip electrode 7 and directed toward the floor portion 2d that is at ground potential. Meanwhile, the formation of an electric field extending into the accommodation chamber 4 is facilitated. Consequently, an electrostatic field is efficiently and effectively formed on the floor portion 2d side within the accommodation chamber 4. Two or more electrode members 22 may be arranged side by side on the floor portion 1d. The electrode members 22 may be spaced out in such a manner that gaps between the adjacent electrode members 22 serve as ventilation paths communicating with the T rails.

In the embodiment above, the power source of the cooling apparatus 3 is used as a power source for forming an electrostatic field. In some embodiments, a power supply device exclusively for formation of an electrostatic field is provided.

The embodiment above has been described so far as an embodiment of the electrostatic field-generating cool container 1 designed for transport of goods. In some embodiments, the electrode member 5 finds use in an electrostatic field-generating cooler designed not for transport of goods but for permanent installation. The present invention may therefore be implemented as an electrostatic field-generating cooler having the features of the electrostatic field-generating cool container 1 according to the embodiment above. The electrostatic field-generating cool container 1 according to the embodiment above includes the cooling apparatus 3. In some embodiments, the present invention is implemented as an electrostatic field-generating container or an electrostatic field-generating cooler that does not include the cooling apparatus 3. These embodiments differ from the electrostatic field-generating cool container 1 according to the embodiment above in that cooling is not provided.

### Reference Signs List

- 1: electrostatic field-generating cool container
- 2: container casing
- 2a: ceiling portion
- 2a1: ceiling surface
- 2a2: reinforcement
- 2a3: ceiling surface ventilation path
- 2b: side wall portion
- 2c: innermost wall portion
- 2d: floor portion
- 2d1: floor portion ventilation path
- 2e: door
- 2e1: rotating shaft
- 2f: opening
- 2f1: upper frame portion
- 2g: step portion
- 3: cooling apparatus
- 4: accommodation chamber
- 5: electrode member
- 6: electrode-housing member
- 6a: main body part
- 6a1: top face portion
- 6a2: side face portion
- 6a3: bottom face portion
- 6b: cap
- 6c: electrode-housing portion
- 6d: insulation cavity
- 7: strip electrode (bar electrode)
- 8: fastener
- 8a: holding portion
- 8b: flange portion
- 8b1: hole
- 8c: rivet
- 8d: reinforcing vertical wall
- 9: adhesive tape
- 10: electrode-housing member
- 10a: upper circumferential surface
- 11: cylindrical electrode
- 12: electric wire
- 13: branching device
- 14: power cable
- 15: voltage control board
- 16a: cylindrical electrode
- 16b: arc-shaped electrode
- 16c: first V-shaped electrode
- 16d: second V-shaped electrode
- 16d1: flat face portion
- 16e: round bar electrode
- 17: electrode-housing member
- 18: electrode-housing member
- 19: electrode member
- 20: electrode-housing member
- 20a: main body
- 20b: lid
- 20c: recess
- 20c1: electrode-housing portion
- 20c2: insulation cavity
- 21: electrode member
- 22: electrode member
- 23: electrode-housing member
- 23a: main body
- 23b: lid
- 23c: recess
- 23c1: electrode-housing portion
- 23c2: insulation cavity

## Claims

1. An electric field-generating repository, comprising:
a casing including an accommodation chamber and a door for opening and closing the accommodation chamber;
an electrode that forms an electric field in the accommodation chamber when being powered, the electrode being constituted of bar electrodes arranged side by side on an inner surface of the accommodation chamber; and
electrode-housing members that have electrical insulation properties and shield the bar electrodes from an interior of the accommodation chamber.

2. The electric field-generating repository according to Claim 1, wherein the electrode-housing members are tubular members in which the bar electrodes are housed.

3. The electric field-generating repository according to Claim 1, wherein the electrode-housing members are plate-like members in which the bar electrodes are housed.

4. The electric field-generating repository according to any one of Claims 1 to 3, wherein the electrode-housing members are shaped in such a manner that the bar electrodes are covered along their entire length with the electrode-housing members.

5. The electric field-generating repository according to any one of Claims 1 to 4, wherein the electrode-housing members each have recesses in which the bar electrodes are placed.

6. The electric field-generating repository according to any one of Claims 1 to 5, wherein the bar electrodes are connected in parallel to a power source.

7. The electric field-generating repository according to any one of Claims 1 to 6, wherein the electrode-housing members each include an electrode-housing portion in which corresponding one of the electrode-housing members is placed and an insulation cavity that provides isolation between the inner surface of the accommodation chamber and the bar electrode placed in the electrode-housing portion.

8. The electric field-generating repository according to any one of Claims 1 to 7, wherein the bar electrodes extend from a side on which the door is disposed, and the bar electrodes end short of an innermost wall of the accommodation chamber.

9. The electric field-generating repository according to any one of Claims 1 to 8, wherein each of the bar electrodes is a strip electrodes that is a conductive flat plate.

10. The electric field-generating repository according to any one of Claims 1 to 9, wherein
the casing includes a step portion provided between a ceiling surface of the accommodation chamber and an opening fitted with the door for opening and closing, and
each end portion on the door side of each of the electrode-housing members is disposed opposed to the step portion.

11. The electric field-generating repository according to any one of Claims 1 to 10, wherein
the casing includes a step portion provided between a ceiling surface of the accommodation chamber and an opening fitted with the door for opening and closing, and
each of the electrode-housing members does not protrude into the interior of the accommodation chamber beyond an upper frame portion of the opening.
